# EUROPEAN PATENT APPLICATION

(11) **EP 3 517 919 A1**
(43) Date of publication of application: **31.07.2019**
(21) Application number: 17852732.1
(22) Date of filing: 14.08.2017
(51) Int. Cl.: G01L 9/00

(54) **PRESSURE SENSOR**

(30) Priority: 23.09.2016 JP 2016185678
(71) Applicant: Saginomiya Seisakusho, Inc., Tokyo 165-0033 (JP)
(72) Inventor: TAKIMOTO Kazuya, Sayama-shi Saitama 350-1395 (JP); MORITA Masahiro, Sayama-shi Saitama 350-1395 (JP); SAKAI Rihito, Sayama-shi Saitama 350-1395 (JP); TANAKA Tatsuya, Sayama-shi Saitama 350-1395 (JP)
(74) Representative: Kramer Barske Schmidtchen Patentanwälte PartG mbB
(86) International application number: PCT/JP2017/029307
(87) International publication number: WO 2018/055952

(57) **Abstract**

A purpose of the present invention is to provide a pressure sensor that uses a pressure detection element, the pressure detection element using the piezoresistive effect or similar, wherein the pressure sensor reduces distortion of the pressure detection element due to temperature changes, and allows accuracy to be increased and temperature responsiveness to be improved. A pressure sensor (100) according to the present invention includes: a pressure detection element (126) that detects the pressure of a fluid; a support member (125) that supports the pressure detection element (126); and an adhesive layer (125A) that is formed by coating an adhesive agent, and adheres and fixes the pressure detection element (126) and the support member (125), the pressure sensor being characterized in that the adhesive layer (125A) is configured from two layers, an initial curing layer (125A1) and a chip mount curing layer (125A2).

## Description

### Technical Field

The present invention relates to a pressure sensor. In particular, the invention relates to a pressure sensor using a pressure detection element using a piezoresistance effect for example.

### Background Art

Conventionally, as a pressure sensor for detecting a fluid pressure, a pressure sensor such as a semiconductor pressure sensor chip using a piezoresistance effect has been known as disclosed in Patent Literature 1 for example.

A piezo resistance-type pressure detection element is structured to include a diaphragm consisting of material having the piezoresistance effect (e.g., monocrystalline silicon) and a bridge circuit that forms a plurality of semiconductor strain gauges on the diaphragm and that connects these semiconductor strain gauges in a bridge connection manner. A change of the gauge resistance of the semiconductor strain gauges depending on the deformation of the diaphragms can be taken out of the bridge circuit as an electric signal to thereby detect a fluid pressure.

### Citation List

### Patent Literature

[PTL 1] Japanese Patent No. 5044896
[PTL 2] Japanese Patent No. 3987386

### Summary of Invention

### Technical Problem

The pressure sensor using the pressure detection element as described above is configured so that the pressure detection element is fixed by adhesive agent to a support member such as a column or a housing made by metal material such as Fe•Ni-base alloy or stainless for example. When the ambient temperature changes, a thermal stress is caused by a difference in the linear expansion coefficient among the pressure detection element, the column member, and the adhesive agent. Specifically, when the ambient temperature declines for example, then the adhesive agent contracts compared with the pressure detection element. When the ambient temperature increases, then the adhesive agent expands compared with the pressure detection element. This thermal stress causes a disadvantage that the pressure detection element has a strain to change the output characteristic of the pressure detection element, which causes a lower sensor output accuracy. Another disadvantage is that, when the thermal stress changes, the viscoelasticity of the adhesive agent requires a long time for the stress to have an equilibrium state, which causes a deteriorated temperature response.

Therefore, it is an objective of the present invention to provide a pressure sensor using a pressure detection element using a piezoresistance effect for example by which the strain of the pressure detection element due to a temperature change can be reduced, the accuracy can be improved, and the temperature response can be improved.

### Solution to Problem

In order to solve the above disadvantages, the pressure sensor of the present invention includes: a pressure detection element for detecting a fluid pressure, a support member for supporting the pressure detection element; and an adhesive agent layer formed by coating adhesive agent, for adhesively fixing the pressure detection element and the support member. The adhesive agent layer is composed of two layers of an initial hardening layer and a chip mount hardening layer.

The initial hardening layer may be formed in a flat manner on the entire surface of the support member.

The initial hardening layer also may be formed to have a shape having a projection portion at the center of the surface of the support member.

The support member may have a linear expansion coefficient in a range from 2 to 22 [10⁻⁶/degrees C].

The support member may have a linear expansion coefficient in a range from 2.6 to 8.5 [10⁻⁶/degrees C].

The adhesive agent layer including the initial hardening layer and the chip mount hardening layer may have a thickness of 5µm or more.

### Advantageous Effects of Invention

The pressure sensor of the present invention can reduce the strain of the pressure detection element due to a temperature change in the pressure sensor using the pressure detection element using the piezoresistance effect for example, thus providing an improved accuracy and an improved temperature response.

### Brief Description of Drawings

Fig. 1 is a longitudinal sectional view illustrating the attaching structure of the pressure detection element of the pressure sensor of the present invention;
Fig. 2 is a longitudinal sectional view illustrating the entirety of a liquid sealing pressure sensor as an example of the pressure sensor of the present invention;
Fig. 3 is a longitudinal sectional view illustrating the attaching structure of the pressure detection element of a conventional pressure sensor;
Fig. 4A illustrates the output characteristic of the pressure detection element when there is no temperature response delay;
Fig. 4B illustrates the output characteristic of the pressure detection element when there is a temperature response delay;
Fig. 5A illustrates the comparison of the output accuracy of the pressure detection element depending on the existence or nonexistence of an adhesive agent layer;
Fig. 5B illustrates the displacement due to a load;
Fig. 6 illustrates the correlation between the thickness of the adhesive agent layer and the temperature response; and
Fig. 7 is a longitudinal sectional view illustrating another example of the attaching structure of the pressure detection element of the pressure sensor of the present invention.

### Description of Embodiments

The following section will describe an embodiment of the present invention with reference to the drawings.

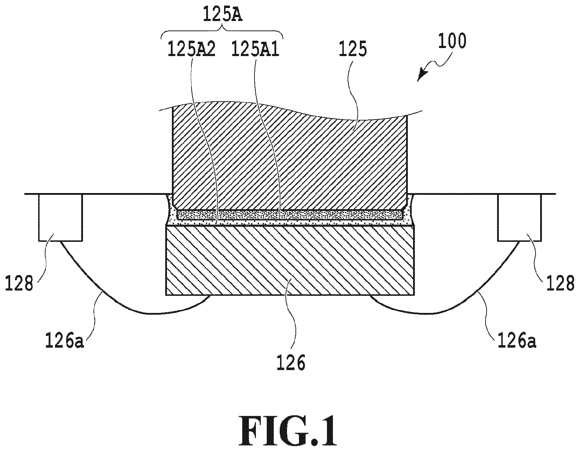

Fig. 1 is a longitudinal sectional view illustrating the attaching structure of a pressure detection element 126 of a pressure sensor 100 of the present invention.

In Fig. 1, the pressure detection element 126 is attached to a support member such as a column 125 via an adhesive agent layer 125A formed by coated adhesive agent. Thereafter, a lead terminal (not shown) of the pressure detection element 126 and a plurality of lead pins 128 are connected by a wire bonding step by a bonding wire 126a made of gold or aluminium.

The pressure detection element 126 is a semiconductor pressure sensor chip using a piezoresistance effect for example. The pressure detection element 126 using the piezoresistance effect is mainly composed of a semiconductor substrate unit having a diaphragm consisting of material having a piezoresistance effect (e.g., monocrystalline silicon) and a base unit consisting of glass for example. The semiconductor substrate unit and the base unit are joined by an anodic bonding method for example. A space between the diaphragm of the semiconductor substrate unit and the base unit functions as a reference pressure chamber. The diaphragm of the semiconductor substrate unit includes a plurality of semiconductor strain gauges. These semiconductor strain gauges are bridge-connected to configure a bridge circuit. This bridge circuit allows the deformation of the diaphragm caused by a pressure difference between an outside pressure and the reference pressure chamber to be extracted as an electric signal showing a change of the gauge resistance of the semiconductor strain gauge, thereby detecting the fluid pressure.

The column 125 has been described as being formed by Fe•Ni-base alloy. However, the invention is not limited to this. The column 125 also may be formed by other metal materials such as stainless. Alternatively, the column 125 may be omitted to achieve the direct fixation on a flat face forming a concave unit of a hermetic glass 124.

The adhesive agent layer 125A may be silicone-base adhesive agent. For example, the adhesive agent layer 125A may preferably be the flexible one having an addition type-one component system but also may be gel-like adhesive agent. Silicone-base adhesive agent may be adhesive agent having a low molecular siloxane bond for example.

The silicone-base adhesive agent may be, for example, the one in which the substitutional group on a silicon atom of polysiloxane of a base polymer is a fluorinated hydrocarbon group such as a methyl group, a phenyl group, or a trifluoropropyl group. Alternatively, the silicone-base adhesive agent also may be condensation silicone rubber having the following structural formula as a main component.

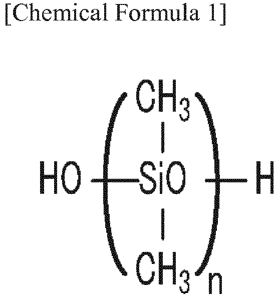

The silicone-base adhesive agent also may be the one including addition type silicone rubber having the following structural formula for example as a main component.

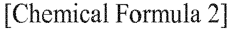

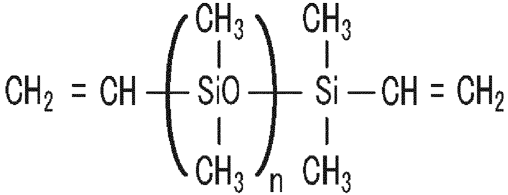

The silicone-base adhesive agent may be the one having a two-component system or the condensation or UV-curing one. The silicone-base adhesive agent may be substituted with urethane-base adhesive agent having a two-component system. Fluorine-based adhesive agent also may be used. The fluorine-based adhesive agent may be liquid fluorine elastomer having self adhesiveness or may be a gel-like adhesive agent.

The fluorine-based adhesive agent may be substituted, for example, with elastomer having the following structural formula as filling material including fluorinated polyether skeleton and a silicone crosslinking reaction group at an end.

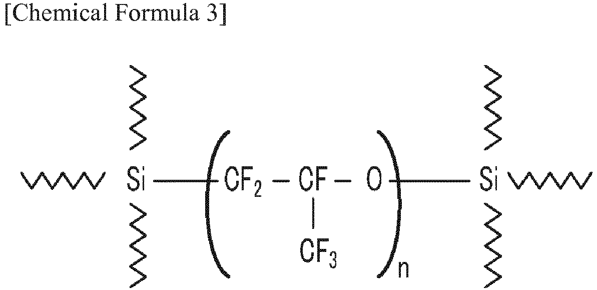

The fluorine-based adhesive agent also may be substituted, for example, with perfluoro elastomer having the following structural formula.

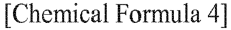

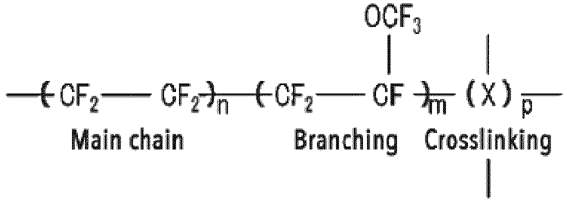

The fluorine-based adhesive agent also may be substituted, for example, with fluorine rubber having the following structural formula.

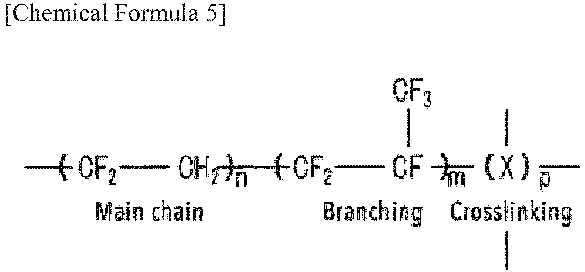

As shown in Fig. 1, the pressure sensor 100 of the present invention is configured so that the adhesive agent layer 125A is composed of two layers of an initial hardening layer 125A1 and a chip mount hardening layer 125A2. In order to maintain the adhesive agent layer 125A having a predetermined thickness, the initial hardening layer 125A1 is prepared, prior to the adhesion of the pressure detection element 126, by being coated and cured in advance. The initial hardening layer 125A1 is entirely formed to have a flat shape. After the initial hardening layer 125A1 is coated and cured, the chip mount hardening layer 125A2 is coated when the pressure detection element 126 is actually mounted. The initial hardening layer 125A1 and the chip mount hardening layer 125A2 are made of one material among the above-described materials of the adhesive agent layer 125A. However, the initial hardening layer 125A1 and the chip mount hardening layer 125A2 also may be made of different materials that are compatible. As described above, the adhesive agent layer 125A composed of the two layers of the initial hardening layer 125A1 and the chip mount hardening layer 125A2 allows the adhesive agent layer 125A to maintain a predetermined thickness as described later. This can reduce the strain of the pressure detection element 126 due to a temperature change, thus providing an improved accuracy and an improved temperature response.

The following section will describe the entire structure of the liquid sealing-type pressure sensor 100 as an example of the pressure sensor of the present invention having the attaching structure of the pressure detection element 126 as described above.

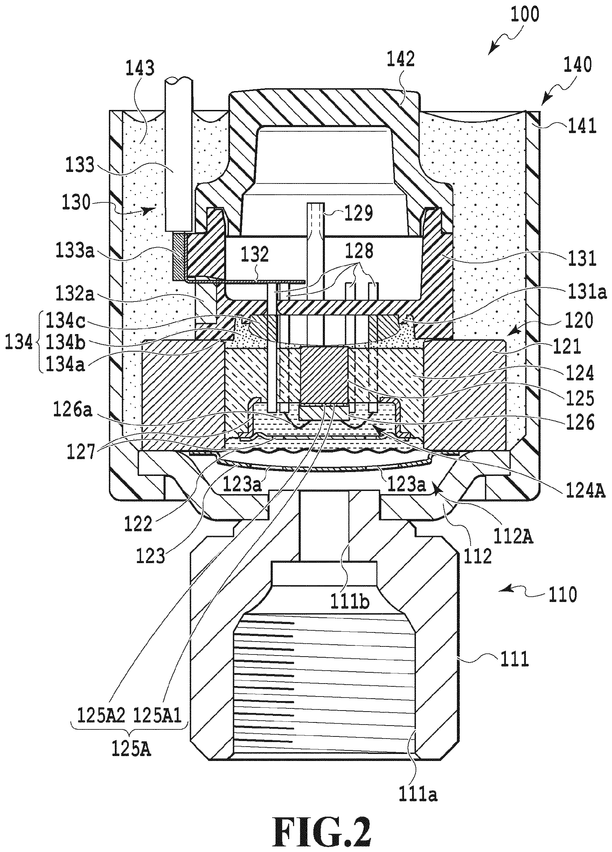

Fig. 2 is a longitudinal sectional view illustrating the entirety of the liquid sealing pressure sensor 100 as an example of the pressure sensor of the present invention.

In Fig. 2, the liquid sealing-type pressure sensor 100 includes a fluid introduction unit 110 that introduces pressure-detected fluid to a pressure room 112A (which will be described later), a pressure detection unit 120 that detects the pressure of the fluid of the pressure room 112A, a signal sending unit 130 that sends a pressure signal detected by the pressure detection unit 120 to the exterior, and a cover member 140 that covers the fluid introduction unit 110, the pressure detection unit 120, and the signal sending unit 130.

The fluid introduction unit 110 includes a metal-made joint member 111 that is connected to a piping through which pressure-detected fluid is guided and a bowl-like shaped metal base plate 112 that is connected by welding for example to an end connected to the piping of the joint member 111 and another end.

The joint member 111 includes a female screw 111a screwed in a male screw at the connection of the piping and a port 111b to guide, to the pressure room 112A, the fluid introduced through the piping. The port 111b has an opening end connected by welding for example to an opening provided at the center of the base plate 112. Although the joint member 111 includes the female screw 111a in this example, the joint member 111 also may include a male screw. The joint member 111 also may be substituted with a copper-made connection pipe. The base plate 112 has a bowl-like shape expanding to the side opposed to the joint member 111 to form the pressure room 112A between the base plate 112 and a diaphragm 122 (which will be described later).

The pressure detection unit 120 includes a housing 121 having a penetration hole, the diaphragm 122 that isolates the above-described pressure room 112A from a liquid-sealing room 124A (which will be described later), a diaphragm protection cover 123 provided at the pressure room 112A side of the diaphragm 122, hermetic glass 124 fitted to the interior of the penetration hole of the housing 121, a liquid-sealing room 124A in which pressure transmission medium such as silicone oil or fluorine-based inert liquid is filled between the concave unit at the pressure room 112A side of the hermetic glass 124 and the diaphragm 122, a column 125 provided in a penetration hole at the center of the hermetic glass 124, a pressure detection element 126 that is fixed to the column 125 and that is provided in the liquid-sealing room 124A, a potential adjustment member 127 provided to surround the liquid-sealing room 124A, a plurality of lead pins 128 fixed to the hermetic glass 124, and an oil filling pipe 129 fixed to the hermetic glass 124.

The housing 121 is formed by metal material such as Fe•Ni-base alloy or stainless for example. The diaphragm 122 and the diaphragm protection cover 123 are both formed by metal material and are both welded at the peripheral edge part of the penetration hole at the pressure room 112A side of the housing 121. The diaphragm protection cover 123 is provided in the pressure room 112A in order to protect the diaphragm 122 and includes a plurality of communication holes 123a through which fluid introduced from the fluid introduction unit 110 passes. After the pressure detection unit 120 is assembled, the housing 121 is connected by welding for example at the peripheral edge part of the base plate 112 of the fluid introduction unit 110.

The column 125 is obtained by allowing the pressure detection element 126 to adhere to the liquid-sealing room 124A side by the adhesive agent layer 125A. As described above, the pressure sensor 100 of the present invention is configured so that the adhesive agent layer 125A is composed of the two layers of the initial hardening layer 125A1 and the chip mount hardening layer 125A2. The pressure detection element 126 detects the pressure of fluid introduced from the fluid introduction unit 110 to the pressure room 112A via the diaphragm 122 as the pressure fluctuation of silicone oil for example in the liquid-sealing room 124A.

As disclosed in Patent Literature 2, the potential adjustment member 127 is provided in order to provide the pressure detection element 126 in a zero potential so that a circuit in a chip for example is prevented from being subjected to the adverse influence by a potential generated between a frame ground and a secondary power source. The potential adjustment member 127 is provided between the pressure detection element 126 in the liquid-sealing room 124A and the diaphragm 122, is formed by conductive material such as metal, and is connected to a terminal connected to the zero potential of the pressure detection element 126.

The hermetic glass 124 has the plurality of lead pins 128 and the oil filling pipe 129 that are fixed by a hermetic treatment while penetrating therethrough. In this embodiment, the total of eight lead pins 128 are provided as the lead pins 128. Specifically, three lead pins 128 are used for external input/output (Vout), driving voltage supply (Vcc), and grounding (GND) applications and five lead pins 128 are used as terminals for the adjustment of the pressure detection element 126. In Fig. 2, four lead pins 128 are shown among the eight lead pins 128. The plurality of lead pins 128 are connected to the pressure detection element 126 by the bonding wire 126a made of gold or aluminium for example to constitute the external input/output terminal of the pressure detection element 126.

The oil filling pipe 129 is provided to inject silicone oil or fluorine-based inert liquid for example used as pressure transmission medium in the liquid-sealing room 124A. After the oil injection, one end of the oil filling pipe 129 is crushed and sealed as shown by the dotted line of Fig. 2.

The signal sending unit 130 is provided at a side opposed to the pressure room 112A of the pressure detection unit 120 and includes a terminal base 131 on which the plurality of lead pins 128 are arranged, a plurality of connection terminals 132 that are fixed to the terminal base 131 by adhesive agent 132a and that are connected to the plurality of lead pins 128, a plurality of electric wires 133 electrically connected to outer ends of the plurality of connection terminals 132, and a static electricity protection layer 134 formed by silicone-base adhesive agent between an upper end of the housing 121 and the terminal base 131. The static electricity protection layer 134 also may be adhesive agent such as epoxy resin.

The terminal base 131 has a substantially circular cylinder-like shape and is provided, at a middle of the circular cylinder, to have a shape having a guide wall to guide the above-described plurality of lead pins 128 and is formed by resin material such as polybutylene terephthalate (PBT). The terminal base 131 is fixed to the upper part of the housing 121 of the pressure detection unit 120 by the adhesive agent used for the static electricity protection layer 134 for example.

The connection terminal 132 is formed by metal material and is fixed by the adhesive agent 132a in a direction vertical to a side wall of the circular cylinder at the upper side of the above-described fixation wall of the terminal base 131. In this embodiment, three connection terminals 132 are provided for external input/output (Vout), driving voltage supply (Vcc), and grounding (GND) applications. The three connection terminals 132 have inner ends electrically connected to the corresponding lead pins 128, respectively. The invention is not limited to this connection method and other connection methods may be used.

In this embodiment, three electric wires 133 are provided for the connection to the three connection terminals 132. The electric wire 133 is obtained by presoldering a core wire 133a obtained by peeling the coating of the electric wire 133 formed by polyvinyl chloride (PVC) for example in advance to prepare a bundle of the twisted wire which is electrically-connected to the above-described connection terminal 132 by soldering or welding for example. However, the invention is not limited to this connection method and other connection methods also may be used. The three electric wires 133 are pulled out from the cover member 140 covering the periphery of the pressure sensor 100 and are prepared as a bundle covered by a protection tube (not shown) formed by polyvinyl chloride (PVC) for example.

The static electricity protection layer 134 is provided in order to allow the pressure detection unit 120 to have an improved static electricity proof stress without being influenced by the existence or nonexistence of an ESD protection circuit. The static electricity protection layer 134 is mainly coated on an upper end face of the housing 121 so as to cover the upper end face of the hermetic glass 124. The static electricity protection layer 134 is composed of an annular adhesion layer 134a formed by silicone-base adhesive agent and having a predetermined thickness and a coating layer 134b that is coated on the entire upper end face of the hermetic glass 124 from which the plurality of lead pins 128 are protruded and that consists of silicone-base adhesive agent. An inner circumferential face is provided that forms a hollow portion of the terminal base 131 and that faces the upper end face of the hermetic glass 124. This inner circumferential face includes an annular projection 131a protruding to the hermetic glass 124. The annular projection 131a has a protrusion length set depending on the viscosity of the coating layer 134b for example. The existence of the annular projection 131a formed in the manner as described above allows the coated coating layer 134b to be partially to be strained and maintained by a surface tension within a small space between the annular projection 131a and a part of the inner circumferential face forming the hollow portion of the terminal base 131 that is substantially orthogonal to the upper end face of the hermetic glass 124. This allows the coating layer 134b to be coated without being excessively coated on any one side of the interior of the hollow portion of the terminal base 131. The coating layer 134b is formed on the upper end face of the hermetic glass 124 to have a predetermined thickness. However, the coating layer 134b also may be formed, as shown by a part 134c of Fig. 2, so as to further cover a part of the plurality of lead pins 128 protruding from the upper end face of the hermetic glass 124.

The cover member 140 includes a waterproof case 141 having a substantially-cylindrical shape and covering the periphery of the pressure detection unit 120 and the signal sending unit 130, a terminal base cap 142 covering the upper part of the terminal base 131, and an encapsulant 143 to fill the space between the inner circumferential face of the waterproof case 141 and the outer peripheral face of the housing 121 and the outer peripheral face of the terminal base 131.

The terminal base cap 142 is formed by resin material for example. In this embodiment, the terminal base cap 142 is formed to have a shape to seal the upper part of the above-described terminal base 131 having a circular cylinder and is used to cover the upper part of the terminal base 131 prior to the injection of the encapsulant 143 such as urethane-base resin. However, the terminal base cap 142 is not limited to this shape. The terminal base cap 142 may have any shape that is formed to seal the upper part of the terminal base 131 and the upper part of the waterproof case 141 in an integrated manner to be covered after the injection of the encapsulant 143. Alternatively, another configuration may be used in which another cover member is provided in addition to the terminal base cap 142 so that the upper part of the waterproof case 141 is covered by the cover member after the terminal base cap 142 and the encapsulant 143 are placed.

The waterproof case 141 is formed to have a substantially-cylindrical shape by resin material such as polybutylene terephthalate (PBT). The cylindrical shape has a lower end having a flange unit provided in an inward direction. This flange unit is abutted to the signal sending unit 130 inserted through the opening of the upper part of the waterproof case 141 and the outer periphery of the base plate 112 of the fluid introduction unit 110 connected to the pressure detection unit 120. In this status, the encapsulant 143 is injected to thereby fix interior components such as the pressure detection unit 120.

In this embodiment, the pressure sensor 100 will be described as an example of the pressure sensor of the present invention. However, the invention is not limited to this. The present invention can be applied to all pressure sensors using a pressure detection element using a piezoresistance effect for example.

Next, the following section will describe the attaching structure of a conventional pressure detection element.

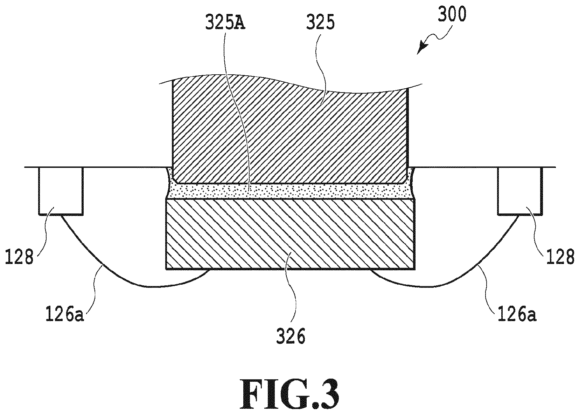

Fig. 3 is a longitudinal sectional view illustrating the attaching structure of a pressure detection element 326 of a conventional pressure sensor 300.

In Fig. 3, the pressure detection element 326 of the conventional pressure sensor 300 is attached to a column 325 via an adhesive agent layer 325A formed by coated adhesive agent. Thereafter, a lead terminal (not shown) of the pressure detection element 326 and the plurality of lead pins 128 are connected by the bonding wire 126a made of gold or aluminium by a wire bonding step. The conventional pressure sensor 300 is configured so that the adhesive agent layer 325A is composed of not two layers but one layer.

In the attaching structure of the pressure detection element 326 of the conventional pressure sensor 300 shown in Fig. 3, the strain of the pressure detection element 326 is caused by a difference in the linear expansion coefficient among the pressure detection element 326, the column 325, and the adhesive agent layer 325A, which causes a disadvantage of deteriorated measurement accuracy and temperature response. Specifically, when the ambient temperature decreases for example, the adhesive agent layer 325A contracts compared with the pressure detection element 326. When the ambient temperature increases, the adhesive agent layer 325A expands compared with the pressure detection element 326. Thus, a thermal stress is caused by the difference in the linear expansion coefficient among the pressure detection element 326, the column 325, and the adhesive agent layer 325A. This thermal stress causes the strain of the pressure detection element 326 to cause a change in the output characteristic of the pressure detection element, which causes a change in the output accuracy of the pressure detection element 326. Furthermore, a change of the thermal stress requires, due to the viscoelasticity of the adhesive agent layer 325A, the stress to have an equilibrium state for a certain time, which causes a deteriorated temperature response. The following section will describe this.

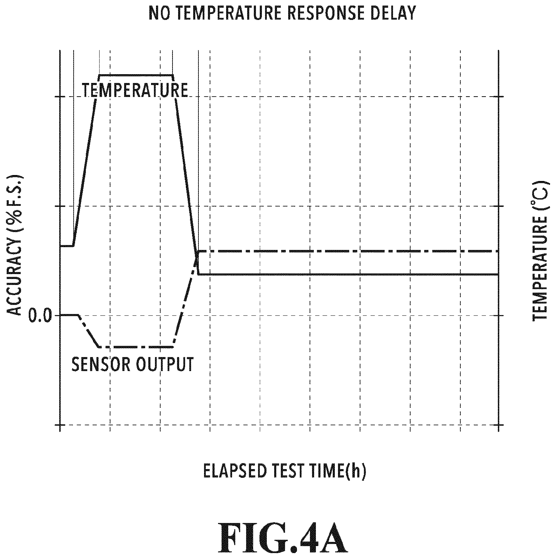

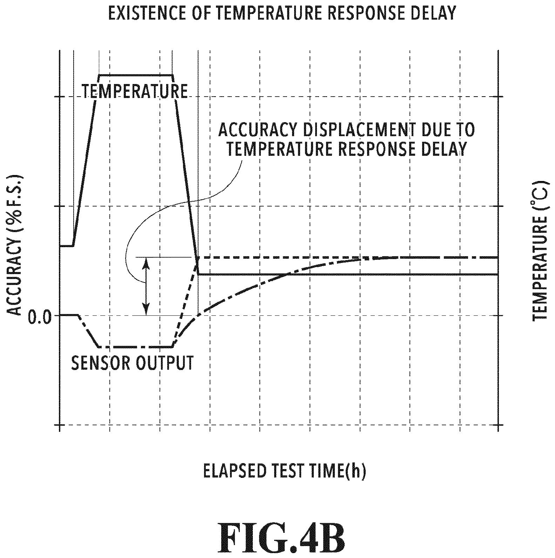

Fig. 4A illustrates the output characteristic of the pressure detection element 326 when there is no temperature response delay. Fig. 4B illustrates the output characteristic of the pressure detection element 326 when there is a temperature response delay.

Graphs shown in Fig. 4A and Fig. 4B both show the output accuracy of the pressure detection element 326 under such temperature cycle conditions that causes a change from a high temperature status at a predetermined time to a low temperature status at a predetermined time. It can be seen that the graphs shown in Fig. 4A and Fig. 4B both show that the pressure detection element 326 has deteriorated output accuracy in the high temperature status. In addition, it can be seen that the graph shown in Fig. 4B shows that the pressure detection element 326 has a further-deteriorated output accuracy in a part including a deteriorated temperature response delay.

Generally, the high temperature (or the low temperature) status shown in Fig. 4A and Fig. 4B has an output accuracy of the pressure detection element 326 that linearly changes. Thus, the correction can be performed by the interior of the pressure detection element 326 or an external circuit. On the other hand, there is a disadvantage that a deteriorated output accuracy of the pressure detection element 326 caused by the temperature response delay is difficult to be corrected because the deteriorated output accuracy changes nonlinearly. Thus, the following section will describe what causes the temperature response delay.

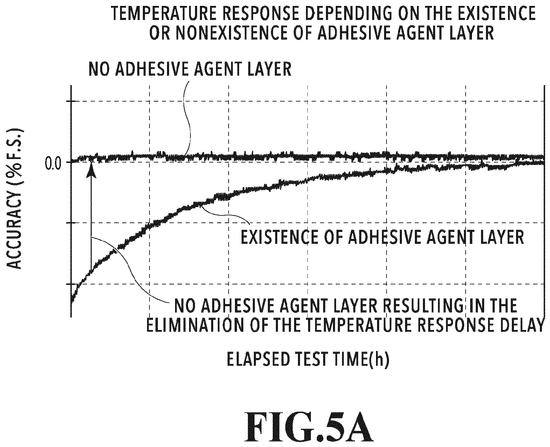

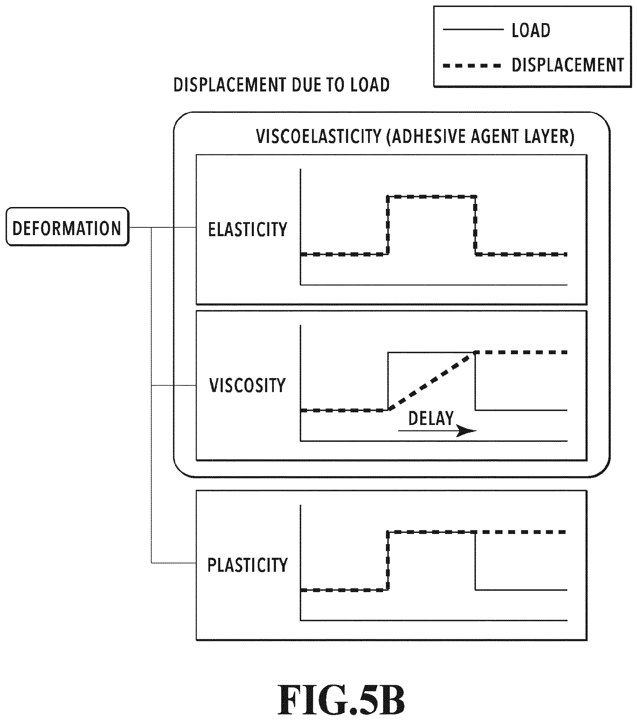

Fig. 5A shows the comparison of the output accuracy of the pressure detection element 326 depending on the existence or nonexistence of the adhesive agent layer 325A. Fig. 5B illustrates the displacement due to a load.

The graph shown in Fig. 5A shows the output accuracy of the pressure detection element 326 when the temperature changes from a high temperature to a low temperature. As described above, the pressure detection element 326 is attached to the column 325 via the adhesive agent layer 325A. The graph shows the comparison between a case where the adhesive agent layer 325A is attached during the measurement and a case where the adhesive agent layer 325A is not attached. It can be seen that, when the adhesive agent layer 325A is not attached, no temperature response delay is caused in the output accuracy of the pressure sensor 300.

The graph shown in Fig. 5B shows, from the upper side, the displacement of the elasticity, viscosity, and plasticity when a load is applied. Among the elasticity, viscosity, and plasticity, the first displacement of the elasticity is followed by the return to the original value without a response delay. On the other hand, the displacement of the plasticity is followed by no change without a response delay. On the other hand, the displacement of the viscosity is caused together with a response delay and is followed by no return to the original value. Specifically, the temperature response delay is caused by the adhesive agent layer 325A having viscoelasticity. The following section will describe how to cope with this.

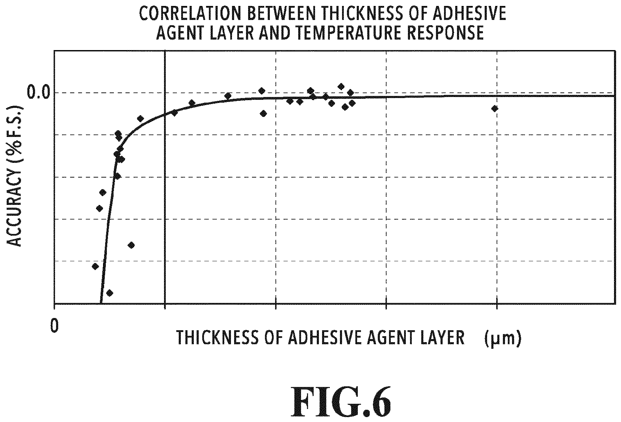

Fig. 6 shows the correlation between the thickness and the temperature response of the adhesive agent layer 325A.

In Fig. 6, the vertical axis shows the output accuracy of the pressure detection element 326 after the temperature change from a high temperature to a low temperature and the horizontal axis shows the thickness of the adhesive agent layer 325A. The measurement was performed by forming projections at a plurality of positions in the column 325 by laser irradiation to adjust the thickness of the adhesive agent layer 325A. The result showed that the adhesive agent layer 325A having a thickness larger than 5µm caused the pressure detection element 326 to resolve the deterioration of output accuracy due to a temperature response delay. This is presumably due to that the adhesive agent layer 325A having a thickness smaller than a predetermined thickness causes the pressure detection element 326 to have strain due to a thermal stress due to a difference in the linear expansion coefficient among the pressure detection element 326, the column 325, and the adhesive agent layer 325A to thereby cause the pressure detection element 326 to have a deteriorated output accuracy and the adhesive agent layer 325A having a thickness larger than a predetermined thickness provides the absorption of the thermal stress due to a difference in the linear expansion coefficient due to the elasticity of the adhesive agent layer 325A to thereby suppress the strain of the pressure detection element 326.

Regarding the linear expansion coefficients at a normal temperature of the respective members used in the pressure sensor 100 of the present invention, glass used as a base unit of the pressure detection element 126 has a linear expansion coefficient of 9.0 [10⁻⁶/degrees C] and the adhesive agent layer 125A has a linear expansion coefficient of about 300 [10⁻⁶/degrees C]. Regarding the linear expansion coefficient of materials of the column 125 at a normal temperature, Fe•Ni-base alloy has a linear expansion coefficient of 5.0 [10⁻⁶/degrees C], stainless steel has a linear expansion coefficient of 17.3 [10⁻⁶/degrees C], brass has a linear expansion coefficient of 20.8 [10⁻⁶/degrees C], and silicon has a linear expansion coefficient of 2.6 [10⁻⁶/degrees C]. Thus, the column 125 has a linear expansion coefficient of 2-22 [10⁻⁶/degrees C] and preferably has a linear expansion coefficient of 2.6-8.5 [10⁻⁶/degrees C]. The reason is that the hermetic glass 124 has a linear expansion coefficient of 8.5(8-10) [10⁻⁶/degrees C] and the column 125 desirably has a linear expansion coefficient lower than this.

Next, the following section will describe another embodiment of the attaching structure of the pressure sensor of the present invention.

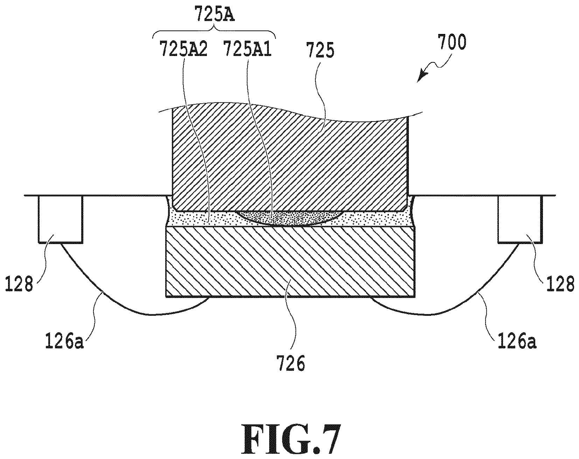

Fig. 7 is a longitudinal sectional view illustrating another example 700 of the attaching structure of a pressure detection element 726 of the pressure sensor of the present invention.

In Fig. 7, as in the pressure sensor 100 shown in Fig. 1, the pressure detection element 726 is attached to a column 725 via an adhesive agent layer 725A formed by coated adhesive agent. Thereafter, a lead terminal (not shown) of the pressure detection element 726 and the plurality of lead pins 128 are connected in a wire bonding step by the bonding wire 126a made of gold or aluminium. Similar members will be denoted with similar reference numerals and will not be further described.

A pressure sensor 700 is different from the pressure sensor 100 shown in Fig. 1 in that the adhesive agent layer 725A composed of two layers of an initial hardening layer 725A1 and a chip mount hardening layer 725A2 is configured so that the initial hardening layer 725A1 is formed to have a projection portion at the center. By allowing the initial hardening layer 725A1 to have a shape having a projection portion at the center as described above, the adhesive agent layer 725A can have a thickness maintained at a predetermined thickness and the strain of the pressure detection element 726 due to a temperature change can be reduced and the accuracy and the temperature response can be improved.

The adhesive agent layers 125A and 725A each of which is composed of two layers have been described with reference to Fig. 1 and Fig. 7. The shapes of the initial hardening layers 125A1 and 725A1 are not limited to the above-described shapes and other shapes also may be used.

As described above, the pressure sensor of the present invention can reduce the strain of the pressure detection element due to a temperature change in the pressure sensor using the pressure detection element using the piezoresistance effect for example, thus providing an improved accuracy and an improved temperature response.

### Reference Signs List

- 100, 300, 700: Pressure sensor
- 110: Fluid introduction unit
- 111: Joint member
- 111a: Female screw
- 111b: Port
- 112: Base plate
- 112A: Pressure room
- 120: Pressure detection unit
- 121: Housing
- 122: Diaphragm
- 123: Diaphragm protection cover
- 123a: Communication hole
- 124: Hermetic glass
- 124A: Liquid-sealing room
- 125, 325, 725: Column
- 125A, 325A, 725A: Adhesive agent layer
- 125A1, 725A1: Initial hardening layer
- 125A2, 725A2: Chip mount hardening layer
- 126, 326, 726: Pressure detection element
- 126a: Bonding wire
- 127: Potential adjustment member
- 128: Lead pin
- 129: Oil filling pipe
- 130: Signal sending unit
- 131: Terminal base
- 132: Connection terminal
- 132a: Adhesive agent
- 133: Electric wire
- 133a: Core wire
- 134: Static electricity protection layer
- 134a: Adhesion layer
- 134b: Coating layer
- 134c: Part
- 140: Cover member
- 141: Waterproof case
- 142: Terminal base cap
- 143: Encapsulant

## Claims

1. A pressure sensor, comprising:
a pressure detection element for detecting a fluid pressure;
a support member for supporting the pressure detection element; and
an adhesive agent layer formed by coating adhesive agent, for adhesively fixing the pressure detection element and the support member,
wherein the adhesive agent layer is composed of two layers of an initial hardening layer and a chip mount hardening layer.

2. The pressure sensor according to claim 1, wherein:
the initial hardening layer is formed in a flat manner on the entire surface of the support member.

3. The pressure sensor according to claim 1, wherein:
the initial hardening layer is formed to have a shape having a projection portion at the center of the surface of the support member.

4. The pressure sensor according to claim 1, wherein:
the support member has a linear expansion coefficient in a range from 2 to 22 [10^{- 6}/degrees C].

5. The pressure sensor according to claim 1, wherein:
the support member has a linear expansion coefficient in a range from 2.6 to 8.5 [10^{- 6}/degrees C].

6. The pressure sensor according to claim 1, wherein:
the adhesive agent layer including the initial hardening layer and the chip mount hardening layer has a thickness of 5µm or more.
